(19) Europäisches Patentamt
European Patent Office
Office européen des brevets

(11) **EP 4 323 171 B1**

(12) **FASCICULE DE BREVET EUROPEEN**

(45) Date de publication et mention
de la délivrance du brevet:
**09.10.2024 Bulletin 2024/41**

(21) Numéro de dépôt: **23711992.0**

(22) Date de dépôt: **14.03.2023**

(51) Classification Internationale des Brevets (IPC):
**B29C 64/118** (2017.01)    **B29C 64/236** (2017.01)
**B29C 64/393** (2017.01)    **B33Y 10/00** (2015.01)
**B33Y 50/02** (2015.01)

(52) Classification Coopérative des Brevets (CPC):
**B29C 64/118; B29C 64/236; B29C 64/393;
B33Y 10/00; B33Y 50/02**

(86) Numéro de dépôt international:
**PCT/EP2023/056494**

(87) Numéro de publication internationale:
**WO 2023/174944 (21.09.2023 Gazette 2023/38)**

(54) **PROCÉDÉ DE FABRICATION D'UN OBJET DÉCORATIF À PARTIR D'AU MOINS UNE COUCHE DE CORDON EXTRUDÉ**

VERFAHREN ZUR HERSTELLUNG EINES DEKORATIVEN GEGENSTANDS AUS MINDESTENS EINER SCHICHT AUS EXTRUDIERTER SCHNUR.

METHOD FOR PRODUCING A DECORATIVE OBJECT FROM AT LEAST ONE LAYER OF EXTRUDED CORD.

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **17.03.2022 FR 2202347**

(43) Date de publication de la demande:
**21.02.2024 Bulletin 2024/08**

(73) Titulaire: **BLACHERE ILLUMINATION
84400 Apt (FR)**

(72) Inventeurs:
• **DEBAT, Benjamin
84400 Apt (FR)**
• **FABRE, Dorian
84400 Apt (FR)**

(74) Mandataire: **Roman, Alexis
SPE Roman-André
35, rue Paradis
B.P. 30064
13484 Marseille Cedex 20 (FR)**

(56) Documents cités:
**FR-A1- 3 069 800    US-A1- 2020 130 283**

**Description**

**Domaine technique.**

L'invention a pour objet un procédé de fabrication d'un objet décoratif à partir d'au moins une couche de cordon extrudé. Le terme d'objet décoratif renvoie à un objet dont la seule fonction est ornementale, en intérieur comme en extérieur.

L'invention se rapporte en particulier, mais non exclusivement, au domaine technique des décorations lumineuses temporaires ou permanentes, et de façon plus précise aux décorations lumineuses situées en extérieur, telles que celles installées traditionnellement pour les fêtes ou autres manifestations. L'invention peut également trouver de nombreuses autres applications, par exemple dans le domaine des décorations publicitaires ou pour l'animation de vitrines commerciales.

**Etat de la technique.**

Les objets décoratifs, tels qu'en particulier les décors lumineux, sont habituellement réalisés à partir d'un cadre en aluminium sur lequel sont solidarisées une ou plusieurs guirlandes lumineuses, généralement formées par une succession de LEDs.

Dans les documents brevet FR 2796446 et FR 3069800, au nom de la demanderesse, ce cadre support des guirlandes est en partie réalisé par injection-extrusion de matière plastique.

Ainsi, de tels objets décoratifs, du fait qu'ils doivent fixer ou maintenir des éclairages sous forme de guirlandes ou d'autres éléments de décoration, nécessitent un cadre partiel ou total en un matériau mécaniquement résistant. En général, ce matériau formant cadre pour le support des éclairages ou analogues consiste en de l'aluminium car ce matériau est léger tout en étant mécaniquement résistant.

Néanmoins, de tels objets décoratifs sont complexes à produire car ils nécessitent deux étapes distinctes, une première étape de réalisation du cadre métallique et une deuxième étape de moulage d'un plastique sur tout ou partie du cadre métallique, pour loger les éclairages et/ou pour former une forme originale.

On connaît à l'heure actuelle des objets décoratifs entièrement fait en matière plastique mais alors ces objets sont faits de cordons extrudés présentant une épaisseur ou un diamètre très élevé, de l'ordre d'au moins trois centimètres d'épaisseur ou de diamètre.

Jusqu'à présent, les tentatives pour produire des objets décoratifs avec des cordons extrudés moins épais ont conduit à réserver l'emploi d'un très petit nombre de polymère, ne présentant pas forcément des propriétés intéressantes pour le présent usage, au risque de problèmes de processabilité dans la filière d'extrusion et/ou de propriétés mécaniques dégradées.

Par ailleurs, la réalisation d'un motif décoratif aux formes complexes n'est pas possible à l'heure actuelle sauf à prévoir de réaliser de manière discontinue une couche de composition à base polymère, en formant par morceaux chaque partie complexe de chacune des couches du motif décoratif.

Ainsi, il n'existe pas à l'heure actuelle de procédé apte à réaliser de manière continue une couche polymère - ou chacune des couches - d'un objet décoratif au formes complexes. Bien entendu, cet objet décoratif doit être obtenu avec la meilleure qualité possible.

La présente invention entend remédier à cet état de fait.

Un objectif de la présente invention vise à remédier aux inconvénients des procédés existants en définissant un processus apte à réaliser un objet décoratif à partir de cordons extrudés - provenant d'une large gamme de polymères dont ceux présentant intrinsèquement les meilleurs propriétés/qualités - de manière continue, le cordon de polymère extrudé présentant sur chaque partie, même complexe, dudit objet une même épaisseur.

Un tel procédé permet de réduire très significativement le temps de réalisation d'un objet décoratif, cet objet présentant une épaisseur ou un diamètre constant tout en présentant une structure stable (sans surépaisseur ou sous-épaisseur ponctuelle) et suffisamment mécaniquement résistante compte tenu des usages de l'objet décoratif.

En effet, cet objet décoratif est destiné à être installé préférentiellement à l'extérieur, quelle que soient les conditions d'environnement.

Un autre objectif essentiel de l'invention consiste à proposer un procédé de fabrication économique et fiable, c'est-à-dire permettant une reproductibilité parfaite de l'objet décoratif autant de fois qu'il est souhaité.

**Présentation de l'invention.**

Après de multiples essais et tentatives, la demanderesse a mis au point un procédé lui permettant de réaliser un objet décoratif, fabriqué de manière économique (gain de temps et de moyens de mise en oeuvre) et d'une qualité parfaite (notamment sans aucun défaut), comportant au moins une couche de cordon extrudé présentant une épaisseur ou un diamètre constant.

L'épaisseur ou le diamètre de l'objet décoratif est compris entre quatre et neuf millimètres, avantageusement entre six et huit millimètres, et très avantageusement une couche de cordon extrudé d'une épaisseur ou diamètre de sept millimètres.

Lorsque le cordon sort de la tête d'extrusion, il présente une section circulaire mais par suite de sa dépose sur le support de réception, le cordon extrudé s'aplatit pour présenter *in fine* une épaisseur (ou diamètre) plus importante que sa hauteur, selon les données présentées ci-dessus.

La solution proposée par l'invention est un procédé de fabrication d'un objet décoratif à partir d'au moins une couche d'un cordon extrudé d'une composition à base polymère, comportant une étape de passage d'une composition à base polymère dans une filière d'extrusion depuis une entrée d'alimentation en ladite composition jusqu'à une tête d'extrusion de laquelle sort un cordon extrudé de ladite composition, le cordon extrudé étant déposé sur un support de réception par l'effet de la gravitation.

Le procédé selon l'invention se caractérise en ce que la tête d'extrusion est commandée par des moyens de commande pour suivre un trajet continu destiné à former ledit objet décoratif selon une couche, lesdits moyens de commande commandant une variation de la vitesse V de déplacement de la tête d'extrusion en fonction d'une variation du trajet de la tête d'extrusion d'un angle $\alpha$, et en ce que, à une distance D d'un changement d'angle $\alpha$, le trajet continu de la tête d'extrusion suit l'équation suivante, pour chacune des couches formant l'objet décoratif le cas échéant :

$$D = a + (b \times V^c) + (d \times \alpha)$$

avec a, b, c et d étant des constantes suivant les valeurs suivantes

$$a = 10{,}6 \pm 10\%$$

$$b = 2{,}76^{-05} \pm 10\%$$

$$c = 2{,}72 \pm 10\%$$

$$d = -0{,}08 \pm 10\%$$

D étant exprimé en millimètre, V en millimètre par seconde (m.s$^{-1}$) et $\alpha$ en degré.

On entend par l'expression « objet décoratif » un objet qui présente comme finalité la décoration esthétique d'un endroit, intérieur ou extérieur. Bien entendu, cet objet décoratif peut être associé à un ou plusieurs autres éléments visuels tels que par exemple des guirlandes ou des lumières et dans ce cas l'objet décoratif peut servir, ou peut avoir pour fonction, de support pour ces éléments associés à l'objet décoratif.

Grâce à ce paramétrage précis de l'accélération/décélération de la tête d'extrusion, en fonction de la vitesse à un moment donné ainsi que d'un prochain changement d'angle pour suivre le motif de l'objet décoratif, quelle que soit la nature chimique de la composition de polymère, ou quasiment quelle que soit cette nature chimique de ladite composition, le cordon extrudé est réalisé automatiquement de manière continue, avec un diamètre/épaisseur constant, de sorte que le processus de fabrication est particulièrement aisé et présente un gain de temps très significatif.

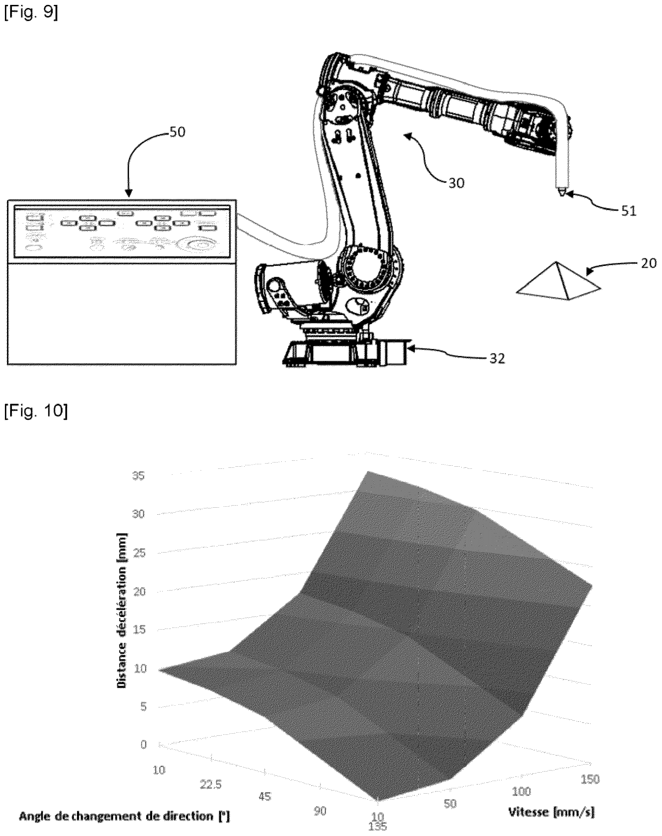

Une représentation de cette équation est visible sur la figure 10.

Ainsi, on obtient des cordons extrudés, et finalement un objet décoratif, présentant des qualités mécaniques et des propriétés physico-chimiques optimums pour les usages variés, dans un environnement souvent très rigoureux, envisagés pour l'objet décoratif.

Également grâce au procédé selon l'invention, on automatise le processus de fabrication d'un objet décoratif de manière à supprimer, ou tout au moins à limiter, la main d'oeuvre, tout en réalisant très rapidement un objet décoratif de qualité.

On doit noter ici que l'expression « effet de la gravitation » concernant le cordon extrudé renvoie au fait que le déplacement du cordon extrudé, depuis sa sortie de la tête d'extrusion jusqu'au support de réception, est contraint ou dirigé uniquement par le poids dudit cordon. Cet effet est rendu possible en particulier par le fait que la filière d'extrusion est disposée ou orientée verticalement, autrement dit dans la direction d'application de la force gravitationnelle. Bien entendu, il faut également considérer la poussée exercée par la filière d'extrusion sur le cordon extrudé, autrement dit l'énergie cinétique de ce dernier en sortie de la tête d'extrusion, et cette force ou cette énergie cinétique peut éventuellement être également orientée dans la direction, et le sens, de la force gravitationnelle. En effet, cette force résultant de la poussée exercée par la filière est orientée avec un angle différent de la force gravitationnelle lorsque le support de réception est en relief.

D'autres caractéristiques avantageuses de l'invention sont listées ci-dessous. Chacune de ces caractéristiques peut être considérée seule ou en combinaison avec les caractéristiques remarquables définies ci-dessus. Chacune de ces caractéristiques contribue, le cas échéant, à la résolution de problèmes techniques spécifiques définis plus avant dans la description et auxquels ne participent pas nécessairement les caractéristiques remarquables définies ci-dessus. Ces dernières peuvent faire l'objet, le cas échéant, d'une ou plusieurs demandes de brevet divisionnaires :

De préférence, les constantes a, b, c et d s'expriment suivant les valeurs suivantes

$$a = 10,6 \pm 5\%$$

$$b = 2,76\text{-}05 \pm 5\%$$

$$c = 2,72 \pm 5\%$$

$$d = -0,08 \pm 5\%$$

Selon un aspect avantageux de l'invention, un bras robotisé, commandé par les moyens de commande, comporte un moyen de stockage d'un volume de la composition à base polymère ainsi que des moyens de transport dudit polymère jusqu'à la tête d'extrusion.

Ce moyen de stockage d'un volume de la composition à base polymère fait partie ou est inclus dans la filière d'extrusion, étant entendu que ce moyen peut être localisé n'importe où, soit sur le bras robotisé soit à distance de ce dernier.

Selon un premier mode de réalisation, la filière d'extrusion est montée à une extrémité du bras robotisé.

Selon un deuxième mode de réalisation avantageux, la filière d'extrusion est montée à distance du bras robotisé de sorte que seule ladite tête d'extrusion est déplacée pour suivre le trajet continu (cf. figure 10).

On peut noter ici que l'équation susvisée n'est en rien modifiée que l'on se trouve dans le premier mode de réalisation ou le deuxième mode de réalisation (avec la filière d'extrusion déportée par rapport au bras robotisé).

Avantageusement, la composition à base polymère consiste en une matrice polymère comportant au moins 70% en poids, avantageusement au moins 95% en poids, d'acrylonitrile butadiène styrène (ABS), d'acide polylactique (polyester PLA), de polycarbonate (PC) ou de Polyéthylène téréphtalate (PET).

On peut noter ici que le procédé selon la présente invention s'applique à un grand nombre de polymère ou mélange polymères.

Selon un aspect particulièrement intéressant de l'invention, la vitesse V de la tête d'extrusion est fonction du débit extrudé par la tête d'extrusion.

Ainsi, selon un mode d'exécution, on peut établir le tableau de correspondance vitesse de déplacement de la tête d'extrusion par rapport au débit de la composition à base polymère extrudé :

| Vitesse [mm/s] | | | Débit [kg/h] |
|---|---|---|---|
| min | Nominal | max | |
| 100 | 130 | 160 | 13 |
| 60 | 80 | 100 | 8 |
| 30 | 50 | 60 | 5 |

Ainsi, de préférence, le cordon extrudé sort de la tête d'extrusion avec un débit compris entre cinq et quinze kilos par heure, avantageusement compris entre huit et douze kilos par heure.

Avantageusement, le cordon extrudé présente, en sortie de la tête d'extrusion, une viscosité comprise entre quatre cents et quatre cent cinquante Pascal par seconde (Pa.s-1) définie selon la norme ISO 11443.

Avantageusement, la température du cordon extrudé, à la sortie de la tête d'extrusion, étant comprise entre 160°C et 260°C, de préférence comprise entre 200°C et 240°C.

Selon un aspect, l'invention se rapporte également à un procédé de fabrication d'un objet décoratif à partir d'au moins une couche d'un cordon extrudé d'une composition à base polymère, comportant une étape de passage d'une composition à base polymère dans une filière d'extrusion depuis une entrée d'alimentation en ladite composition jusqu'à une tête d'extrusion, de laquelle sort un cordon extrudé de ladite composition, la température du cordon extrudé, à la sortie de la tête d'extrusion, étant comprise entre 180°C et 260°C, caractérisé en ce que le cordon extrudé est déposé sur un support de réception de la couche de cordon extrudé par l'effet de la gravitation et en ce que le support de réception est chauffé à une température de chauffe comprise entre 85°C et 170°C et en ce que le support de réception est en aluminium ou en un alliage à base d'aluminium, de préférence en aluminium.

La demanderesse dispose de résultats de test et essais comparatifs ayant permis de mettre en évidence l'intérêt très particulier de l'aluminium ou d'un alliage d'aluminium (cf. tableau 1 ci-dessous). Le support de réception présente alors en particulier une fonction d'adhésion mécanique appropriée pour le cordon extrudé.

On entend par l'expression « température de chauffe » relativement au support de réception le fait que ce dernier présente ce domaine de température à sa surface supérieure, soit la surface en contact (ou susceptible d'être en contact) avec le cordon extrudé.

Avantageusement, le support de réception présente en outre un revêtement destiné à autoriser une adhésion chimique du cordon extrudé. Ce revêtement consiste en un revêtement polymère, de quelques microns ($\mu$m) jusqu'à un ou plusieurs millimètres (au plus deux millimètres). De préférence, ce revêtement consiste en un polyétherimide (PEI).

De préférence, la température de chauffe est comprise entre 95°C et 125°C. Une telle température exclut au moins un polymère compris dans le cadre de la présente invention - à savoir en l'espèce le Polycarbonate présenté dans la suite comme un exemple de polymère possible - mais l'essentiel des polymères utilisables dans le cadre du procédé et du dispositif selon l'invention s'utilisent avec un tel domaine de température de chauffe 95°C à 125°C.

Avantageusement, l'objet décoratif comprend une pluralité de couches de cordons extrudé, chaque couche successive, après la première couche de cordon extrudé, formant alors le support de réception de la couche de cordon extrudé suivante.

L'invention se rapporte également à un procédé de fabrication d'un objet décoratif à partir d'au moins une couche d'un cordon extrudé d'une composition à base polymère, comportant une étape de passage d'une composition à base polymère dans une filière d'extrusion depuis une entrée d'alimentation en ladite composition jusqu'à une tête d'extrusion, présentant un axe z'z, de laquelle sort un cordon extrudé de ladite composition, le cordon extrudé étant déposé sur un support de réception par l'effet de la gravitation, caractérisé en ce que le support de réception se présente sous la forme d'un plateau comportant au moins une portion en relief, la tête d'extrusion étant commandée par des moyens de commande et étant orientable suivant les trois axes et en ce que la tête d'extrusion est continuellement orientée par les moyens de commande de sorte que l'axe z'z est perpendiculaire au support de réception, y compris au niveau de la portion en relief.

Le principe de l'invention réside dans le fait que cet axe z'z de la tête d'extrusion se trouve toujours, tout au long du processus de fabrication de l'objet décoratif, perpendiculaire - soit suivant un angle de 90° - avec le support de réception, c'est-à-dire avec la partie du support sur laquelle le cordon extrudé vient être déposé par effet de gravitation.

Cet objet de l'invention est atteint en premier lieu grâce au fait que la tête d'extrusion est orientable suivant les trois axes - longitudinalement, transversalement et en hauteur - pour suivre exactement et précisément la surface du support, y compris et surtout au niveau de sa portion en relief. Comme on le verra par la suite, cet objet est atteint de manière complémentaire par le fait que le support de réception est lui-même mobile en translation, rotation et en hauteur. La tête d'extrusion, comme éventuellement le support de réception, est commandée par les moyens de commande.

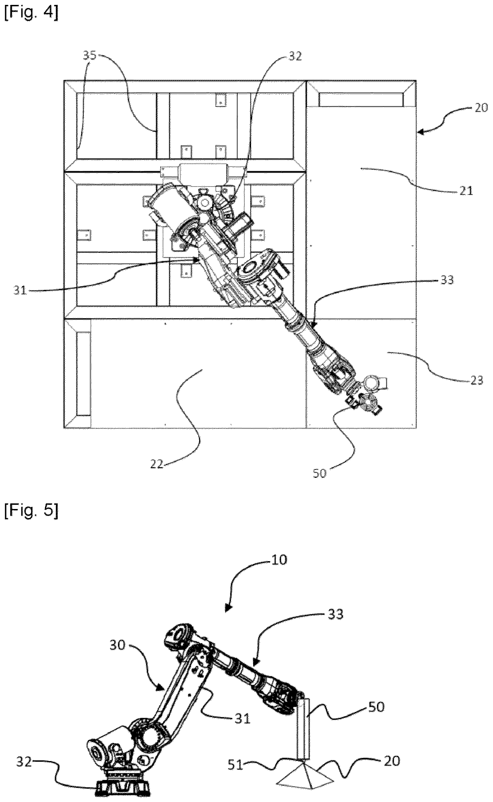

De préférence, il faut noter ici que, lorsque le support de réception est fixe, reposant à l'horizontale (ou au moins un côté du relief s'étendant à l'horizontal), la tête d'extrusion suit perpendiculairement le contour du relief - la portion de relief du support -jusqu'à une pente de ce dernier d'au plus 50°, cette borne de 50° étant inclus (les reliefs visibles sur les figures 5 à 8 présentent des pentes inférieures à 50°). Ainsi, pour que la tête d'extrusion suive toujours perpendiculairement le support de relief au niveau de ce/son relief, le support de réception est avantageusement monté mobile de sorte à l'incliner de préférence d'un angle d'au plus 40°. De cette manière, la tête d'extrusion est apte à suivre perpendiculairement le support de réception quelle que soit la pente de son relief ou de sa portion de relief.

Néanmoins, si l'on utilise un moyen de refroidissement du cordon extrudé, tel qu'en particulier un soufflage par gaz inerte de ce dernier et/ou le choix d'une viscosité spécifique de la composition à base polymère, on peut augmenter la pente maximale du relief jusqu'à près de 90°, tout en autorisant un suivi perpendiculaire de la tête d'extrusion. En effet, si le cordon polymère se fige rapidement à sa sortie de la tête d'extrusion, alors la tête d'extrusion peut être utilisée quelle que soit la pente du relief ou de la portion de relief, sans nécessiter que le support de réception soit angulairement mobile.

Selon une possibilité offerte par l'invention, on peut noter ici que le support de réception peut être mobile indépendamment de la tête d'extrusion, cette dernière pouvant rester immobile tant que l'objectif de présenter la tête d'extrusion perpendiculaire à la surface du support de réception est atteint.

Avantageusement, le support de réception est monté mobile et commandé par les moyens de commande de sorte que l'axe z'z de la tête d'extrusion est perpendiculaire au support de réception.

Selon un autre aspect, l'invention concerne un procédé de fabrication d'un objet décoratif à partir d'au moins une couche d'un cordon extrudé d'une composition à base polymère, comportant une étape de passage d'une composition à base polymère dans une filière d'extrusion depuis une entrée d'alimentation en ladite composition jusqu'à une tête d'extrusion, présentant un diamètre d'ouverture D, de laquelle sort un cordon extrudé de ladite composition, la température du cordon extrudé, à la sortie de la tête d'extrusion, étant comprise entre 180°C et 260°C, le procédé selon l'invention se caractérisant en ce que la tête d'extrusion est située à une distance H comprise entre deux et huit millimètres d'un support de réception de la couche du cordon extrudé, le cordon extrudé étant déposé sur le support de réception par l'effet de la gravitation, et en ce que le diamètre d'ouverture D de la tête d'extrusion est égal à H +/- 1 millimètre.

La demanderesse a réalisé des tests comparatifs montrant que lorsque D = +/-1 mm (millimètre), et uniquement dans le cadre de cette équation, on obtient des propriétés mécaniques optimum pour le cordon extrudé d'une couche de l'objet décoratif. Ces tests comprennent le Module d'Young et l'élongation à la rupture (ISO 527-1) ainsi que le test du choc Charpy entaillé (ISO 179-1). Les résultats de ces tests sont disponibles auprès de la demanderesse et ne sont pas fournis ici par seul souci de concision de clarté.

Le signe « +/- » signifie « plus ou moins ». Ainsi, à titre d'exemple, si l'on considère une distance H égale à cinq millimètres, le diamètre D de la tête d'extrusion est compris entre quatre et six millimètres, bornes supérieure et inférieure incluses.

Grâce à ce paramétrage précis de la distance, ou de la hauteur, de la tête d'extrusion au support de réception, en fonction du diamètre d'ouverture D de cette même tête d'extrusion, on obtient un cordon extrudé présentant une épaisseur ou un diamètre uniforme sur toute sa longueur, ladite épaisseur ou ledit diamètre D étant sensiblement égal à sept millimètres, plus ou moins deux millimètres, et une hauteur de quatre millimètres, plus ou moins deux millimètres. On entend, ici et dans la suite, avec l'expression « la distance de la tête d'extrusion au support de réception » le fait que cette distance est considérée depuis l'extrémité inférieure de la tête d'extrusion jusqu'à la surface supérieure, ou la surface en vis-à-vis de la tête d'extrusion, du support de réception.

De préférence, la distance H est comprise entre quatre et six millimètres, avantageusement la distance H est égale à quatre millimètres.

Avantageusement, la tête d'extrusion se déplace à une vitesse comprise entre quarante et cent cinquante millimètres par seconde, avantageusement comprise entre soixante et cent millimètres par seconde.

Selon un aspect relatif à l'objet décoratif, le procédé de fabrication comprend une étape consistant à équiper la tête d'extrusion d'un obturateur mobile entre une position ouverte autorisant la sortie du cordon de ladite tête et une position fermée empêchant la sortie du cordon de ladite tête. Autrement dit, le dispositif de fabrication comporte un obturateur mobile entre une position ouverte autorisant la sortie du cordon de ladite tête et une position fermée empêchant la sortie du cordon de ladite tête.

De préférence, pour extruder une couche de niveau N dans la première zone depuis une couche de niveau M dans la deuxième zone, tel que M supérieur ou égal à N+1, les étapes suivantes sont réalisées :

- placer l'obturateur en position fermée après la fin de l'extrusion de la couche de niveau M dans la deuxième zone,

- déplacer la tête d'extrusion depuis la deuxième zone vers une position d'extrusion située en vis-à-vis d'une couche de niveau N-1 de la première zone, l'obturateur étant maintenu dans la position fermée,

- lorsque la tête d'extrusion est positionnée dans la position d'extrusion de la première zone, placer l'obturateur en position ouverte et extruder la couche de niveau N en la déposant sur la couche de niveau N-1 de ladite première zone.

**Brève description des figures.**

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :

[Fig. 1] est une vue schématique d'un objet décoratif susceptible d'être fabriqué avec le procédé et le dispositif selon l'invention.

[Fig. 2] est une vue de côté du dispositif de fabrication d'un objet décoratif à partir d'au moins un cordon extrudé d'une composition à base polymère selon la présente invention.

[Fig. 3] est un agrandissement de la partie A présente sur la figure 2, montrant en particulier l'extrémité de la tête d'extrusion et le support de réception.

[Fig. 4] est une vue de dessus du dispositif visible sur la figure 2.

[Fig. 5] est une vue de côté d'un autre mode d'exécution du dispositif de fabrication d'un objet décoratif à partir d'au moins un cordon extrudé d'une composition à base polymère selon la présente invention dans lequel le support de réception, ou au moins une portion dudit support, présente un relief en pyramide.

[Fig. 6] est une autre vue du dispositif visible sur la figure 5 dans laquelle la tête d'extrusion est situé sur un côté du support de réception en relief.

[Fig. 7] est une vue d'un dispositif sensiblement identique à celui visible sur la figure 5 dans laquelle le support de réception présente un relief en demi-sphère.

[Fig. 8] est une autre vue du dispositif visible sur la figure 7 dans laquelle la tête d'extrusion est situé sur un côté du support de réception en relief.

[Fig. 9] est une vue de côté d'un autre mode d'exécution du dispositif de fabrication d'un objet décoratif à partir d'au moins un cordon extrudé d'une composition à base polymère selon la présente invention dans lequel la filière d'extrusion est distante du bras motorisé, seul un conduit amenant la composition à base polymère.

[Fig. 10] est un diagramme illustrant les variations de la distance D, ici notée « distance décélération », en fonction de l'angle $\alpha$ de changement de direction et de la vitesse V selon l'équation objet principal de la présente invention.

## Description des modes de réalisation,

Le procédé et le dispositif objet de l'invention permettent de réaliser des objets décoratifs. Ces objets décoratifs comportent une structure rigide servant le plus souvent de cadre support pour une installation lumineuse, telle qu'une ou plusieurs guirlandes.

Les moyens de commande comportent des moyens de mémoire permettant de stocker ou mémoriser d'une part l'objet décoratif à réaliser, couche par couche, et d'autre part la surface du support de réception 20. Ces deux informations permettent de définir le trajet précis de la tête d'extrusion 51 pour réaliser l'objet décoratif.

De manière globale, l'invention se décline suivant deux aspects techniques.

Lorsque le support de réception 20 est plan ou horizontal, on utilise avantageusement un support de réception 20 consistant en un aluminium ou un alliage d'aluminium et le support de réception 20 est chauffé à une température de chauffe spécifique, telle que mentionnée précédemment. Certains résultats de test attestant de cette invention sont présentés dans le tableau 1 ci-dessous.

Lorsque le support de réception 20 est en relief - creux et/ou bosse/protubérance - ou comporte au moins une portion en relief, le support de réception 20 est avantageusement en bois d'une nature spécifique et le support de réception 20 n'est pas nécessairement chauffé au-delà de la température ambiante. Certains résultats de test attestant de cette invention sont présentés dans le tableau 2 ci-dessous.

On entend par le terme « relief » en lien avec le support de réception 20 toute portion dudit support qui fait saillie sur une surface plane dans laquelle s'étend globalement ou généralement le support de réception 20. Ainsi, ce relief peut consister en un relief négatif par rapport à cette surface plane soit un creux, un décaissement, une cavité ou au contraire un relief positif soit une bosse, une protubérance, une crête.

Bien entendu, on peut prévoir un support de réception 20 qui soit en partie en aluminium ou alliage d'aluminium, chauffé à une certaine température de chauffe, et en partie en relief, cette fois-ci en bois d'une nature spécifique.

Lorsque le support de réception 20 est en relief ou comporte au moins une portion en relief, on envisagera avantageusement un dispositif de fabrication 10 d'un objet décoratif 1 à partir d'au moins un cordon extrudé d'une composition à base polymère, comportant :

-    une filière d'extrusion 50 disposant à une extrémité d'une entrée d'alimentation et à l'autre extrémité d'une tête d'extrusion 51, comportant une buse d'axe z'z, ladite filière 50 étant alimenté avec au moins une composition à base de polymère sortant sous la forme d'un cordon extrudé par la tête d'extrusion 51, le cordon extrudé présente, en sortie de la tête d'extrusion 51, une viscosité comprise entre quatre cents et quatre cent cinquante Pascal par seconde définie selon la norme ISO 1144,

-    un support de réception 20 du cordon extrudé se présentant sous la forme d'un plateau,

- des moyens de commande et de déplacement de la filière d'extrusion 50 et de la tête d'extrusion 51,

- un bras robotisé, commandé par les moyens de commande, comporte un moyen de stockage d'un volume de la composition à base polymère ainsi que des moyens de transport dudit polymère jusqu'à la tête d'extrusion 51,

caractérisé en ce que le support de réception 20 présente au moins une portion en relief et consiste en du bois présentant une dureté Brinell comprise entre 20 N.mm$^{-2}$ (Newton par millimètre carré) et 30 N.mm$^{-2}$.

Avantageusement, le support de réception 20 est en bois laminé, assemblé avec une résine polymère.

Très avantageusement, le support de réception 20 consiste en du bouleau.

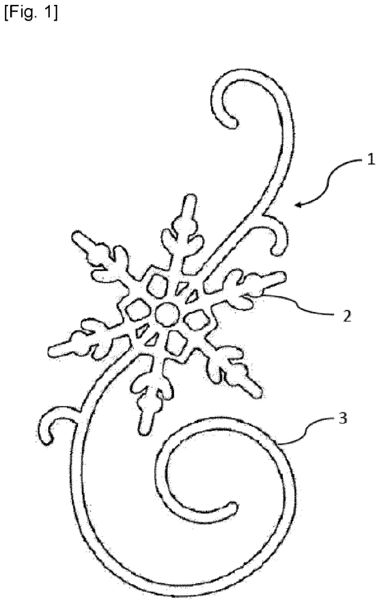

Sur la figure 1, l'objet décoratif 1 consiste en un flocon de neige stylisé 2 installé sur une volute 3. A titre d'exemple, sa longueur est comprise entre 50 centimètres (cm) et deux mètres tandis que sa largeur est comprise entre vingt centimètres et un mètre. Concernant son épaisseur, une particularité de la présente invention réside dans le fait qu'un tel objet décoratif 1 ou 2, 3 est formé d'au moins une couche de cordon extrudé, éventuellement une pluralité de couches de cordons extrudés et ces cordons extrudés présentent tous une épaisseur sensiblement identique, comprise entre trois et dix millimètres, préférentiellement de l'ordre - soit plus ou moins un - de sept millimètres, et une hauteur de quatre millimètres, préférentiellement plus ou moins un millimètre.

En fonction de sa nature monocouche ou multicouches, on parle respectivement d'un objet décoratif à deux dimensions (2D) ou à trois dimensions (3D). Néanmoins, le terme de « relief » est employé pour signifier qu'une couche - ou au moins couche - ne s'étend pas suivant un plan puisqu'elle comporte au moins un relief. Ainsi, une couche à deux dimensions peut présenter un ou plusieurs reliefs tandis qu'un multicouche peut n'assembler que des couches sans relief de sorte que ce multicouche ne présente aucun relief.

Cet objet décoratif 1 peut être attaché à un câble ou fixé à un poteau ou un mur pour une installation extérieure, par exemple dans une rue ou sur la façade d'un monument, ou encore à l'intérieur d'une habitation.

L'objet décoratif 1 peut intégrer une ou plusieurs guirlandes lumineuses, non visibles sur cette figure annexée.

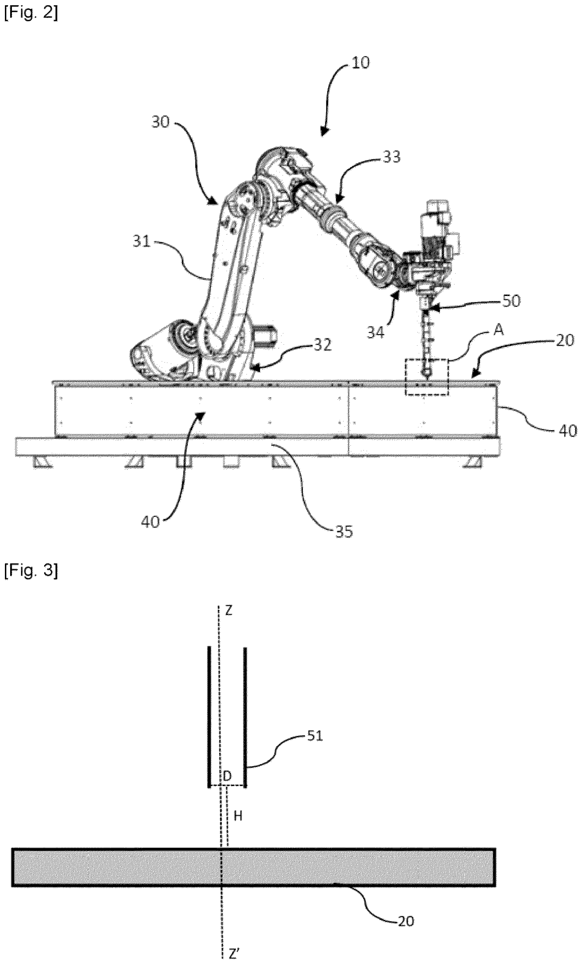

Les figures 2 à 9 s'attachent à montrer les éléments du dispositif de fabrication 10 d'un objet décoratif à partir d'au moins un cordon extrudé d'une composition à base polymère. Ces éléments permettent la mise en oeuvre du procédé selon l'invention de sorte que, dans le cadre de la présente invention, une caractéristique liée au dispositif 10 trouve à s'appliquer au procédé, et inversement.

Ce dispositif 10 comporte un support de réception 20 du cordon extrudé. Comme on peut le voir notamment sur les figures 2 à 4, dans l'exemple choisi ici pour illustrer l'invention, ce support de réception 20 se présente sous la forme d'un L, avec deux portions rectangulaires 21, 22 de forme et de dimensions sensiblement identiques s'étendant perpendiculairement l'une par rapport à l'autre. Ces deux portions rectangulaires 21, 22 forment chacune les portions d'extrémités du support de réception 20 tandis qu'une portion carrée est disposée à l'angle de jonction formé entre ces deux portions d'extrémités 21, 22. A titre d'exemple, les portions d'extrémités 21, 22, rectangulaires, présentent une longueur comprise entre cinquante centimètres et deux mètres et une largeur comprise entre cinquante centimètres et cent cinquante centimètres. La portion de jonction 23 est un carré d'une longueur comprise entre cinquante centimètres et cent cinquante centimètres, étant considéré que la largeur des portions d'extrémités 21, 22 est avantageusement égale à la longueur du côté de la portion de jonction 23 de manière à ce que les bords d'extrémités du support de réception 20 soient bien continus et essentiellement linéaires ou rectilignes.

Le choix de la température de chauffe du support de réception 20 du cordon extrudé ainsi que sa nature ou sa matière ont été déterminés après de multiples essais et tests comparatifs. Certains des résultats de ces essais et tests sont présentés dans le tableau 1 ci-dessous.

Lorsque le support de réception 20 est plan ou horizontal, alors, comme on le voit dans la suite, le support de réception 20 est avantageusement chauffé, dans une gamme de température spécifique, et consiste en de l'aluminium ou un alliage d'aluminium.

Le premier critère recherché est ici le critère de retrait qui doit être au plus égal à 2% pour satisfaire l'invention. En conséquence, les éprouvettes testées ne satisfaisant pas ce critère de 2% en retrait n'ont pas été subies les essais mécaniques. Des résultats de tests sont présentés dans le tableau 1 ci-dessous (« < » signifie « inférieure à » et « > » signifie « supérieure à »).

| Tableau 1 | | | | | |
|---|---|---|---|---|---|
| support de réception (plaque) | Cordon | T° de chauffe | Retrait (%) | Module d'Young (MPa) | Elongation à la rupture (%) |
| Cuivre | ABS | 70°C | > 2 | - | - |
| | | **100°C** | 2 < | 1400 | 15 |
| | | 200°C | > 2 | - | - |
| | PC | 70°C | > 2 | - | - |
| | | **100°C** | 2 < | 2100 | 100 |
| | | 200°C | > 2 | - | - |
| | PLA | 70°C | > 2 | - | - |
| | | **100°C** | 2 < | 2850 | 12 |
| | | 200°C | > 2 | - | - |
| Acier inoxydable | ABS | 70°C | > 2 | - | - |
| | | **100°C** | 2 < | 1420 | 16 |
| | | 200°C | > 2 | - | - |
| | PC | 70°C | > 2 | - | - |
| | | **100°C** | 2 < | 2150 | 105 |
| | | 200°C | > 2 | - | - |
| | PLA | 70°C | > 2 | - | - |
| | | **100°C** | 2 < | 2900 | 121 |
| | | 200°C | > 2 | - | - |
| Laiton | ABS | 70°C | > 2 | - | - |
| | | **100°C** | 2 < | 1490 | 16 |
| | | 200°C | > 2 | - | - |
| | PC | 70°C | > 2 | - | - |
| | | **100°C** | 2 < | 2180 | 111 |
| | | 200°C | > 2 | - | - |
| | PLA | 70°C | > 2 | - | - |
| | | **100°C** | 2 < | 2980 | 121 |
| | | 200°C | > 2 | - | - |
| Cupronickel | ABS | 70°C | > 2 | - | - |
| | | **100°C** | 2 < | 1490 | 16 |
| | | 200°C | > 2 | - | - |
| | PC | 70°C | > 2 | - | - |
| | | **100°C** | 2 < | 2200 | 111 |
| | | 200°C | > 2 | - | - |
| | PLA | 70°C | > 2 | - | - |
| | | **100°C** | 2 < | 2950 | 122 |
| | | 200°C | > 2 | - | - |

(suite)

| support de réception (plaque) | Cordon | T° de chauffe | Retrait (%) | Module d'Young (MPa) | Elongation à la rupture (%) |
|---|---|---|---|---|---|
| | | Tableau 1 | | | |
| Alliage Cuivre-**Aluminium** | ABS | 70°C | > 2 | - | - |
| | | **100°C** | 2 < | 1550 | 18 |
| | | 200°C | > 2 | - | - |
| | PC | 70°C | > 2 | - | - |
| | | **80°C** | 2 < | 2250 | 110 |
| | | 200°C | > 2 | - | - |
| | PLA | 70°C | > 2 | - | - |
| | | **80°C** | 2 < | 2960 | 12.3 |
| | | 200°C | > 2 | - | - |
| **Aluminium** | ABS | 70°C | > 2 | - | - |
| | | **80°C** | 2 < | 1600 | 20 |
| | | 200°C | > 2 | - | - |
| | PC | 70°C | > 2 | - | - |
| | | **80°C** | 2 < | 2300 | 120 |
| | | 200°C | > 2 | - | - |
| | PLA | 70°C | > 2 | - | - |
| | | **100°C** | 2 < | 3020 | 12.6 |
| | | 200°C | > 2 | - | - |

Le critère de retrait est considéré, éventuellement avec un léger aménagement structurel, selon la norme ISO 294. La norme ISO 527-1 est considérée pour la détermination du Module d'Young et l'élongation à la rupture. ABS : Acrylonitrile butadiène styrène ; PC : Polycarbonate et PLA : polymère d'acide polylactique.

En premier lieu, grâce à l'application d'une température de chauffe dans le domaine de 85°C à 140°C, préférentiellement de 95°C à 125°C, on obtient des cordons extrudés présentant un faible retrait et des propriétés mécaniques satisfaisantes, voire très satisfaisantes. Si l'on ajoute à cette première caractéristique essentielle le fait que le support de réception 20 est en aluminium, ou en un alliage d'aluminium, alors on améliore encore les résultats en retrait / mécaniques et on obtient un objet décoratif facilement détachable, sans dégradation, du support de réception 20.

Lorsque le support de réception est en relief ou comporte au moins un relief, protubérance ou creux, alors la demanderesse est avantageusement en bois de classe B selon la dureté Brinell, comme on peut le voir dans le tableau 2 ci-dessous.

Dans le cadre de l'invention, pour une meilleure ou parfaite processabilité d'une ou des couches à base de composition polymère, on veut obtenir un résultat de rugosité inférieur à 3,2 $\mu$m (micromètre), de préférence inférieur à 1,6 $\mu$m, un résultat de conductivité thermique *à compléter* et un résultat de dilatation thermique d'au plus *à compléter*.

| support de réception (nature) | Rugosité (en $\mu$m) | Conductivité thermique (W.m$^{-1}$.K$^{-1}$) | Dilatation thermique (K$^{-1}$) |
|---|---|---|---|
| | | Tableau 2 | |
| Acier | 0,8 | 52 | $12,0 \times 10{\text -}6$ |
| | 1,6 | 50 | |
| | 3,2 | 46 | |
| | 6,3 | 42 | |

(suite)

| Tableau 2 | | | |
|---|---|---|---|
| support de réception (nature) | Rugosité (en μm) | Conductivité thermique (W.m$^{-1}$.K$^{-1}$) | Dilatation thermique (K$^{-1}$) |
| Aluminium | 0,8 | 230 | 23,0 × 10$^{-6}$ |
| | 1,6 | 205 | |
| | 3,2 | 198 | |
| | 6,3 | 187 | |
| Céramique (grès) | 0,8 | 3,5 | 7,0 × 10$^{-6}$ |
| | 1,6 | 3,2 | |
| | 3,2 | 3,0 | |
| | 6,3 | 2,6 | |
| Bois (noyer) | 0,8 | 0,23 | 6 × 10$^{-6}$ |
| | 1,6 | 0,21 | |
| | 3,2 | 0,18 | |
| | 6,3 | 0,15 | |
| Bois (bouleau) | 0,8 | 0,20 | 5 × 10$^{-6}$ |
| | 1,6 | 0,19 | |
| | 3,2 | 0,17 | |
| | 6,3 | 0,16 | |
| Bois laminé (bouleau) | 0,8 | 0,15 | 3,5 × 10$^{-6}$ |
| | 1,6 | 0,14 | |
| | 3,2 | 0,12 | |
| | 6,3 | 0,11 | |

Le critère de rugosité est considéré, éventuellement avec un léger aménagement structurel, selon la norme ISO 4287. La norme EN 12939 est considérée pour la détermination de la conductivité thermique. La norme ISO 11359 est considérée pour la dilatation thermique ou coefficient de dilatation thermique linéique.

Quatre types de polymères ont été dans le cadre du tableau 2 ci-dessus, à savoir ABS : Acrylonitrile butadiène styrène ; PC : Polycarbonate et PLA : polymère d'acide polylactique ; PET : Polyéthylène Téréphtalate.

Il faut noter aussi que certains bois de la classe C de dureté Brinell comprise entre 30 N.mm$^{-2}$ et 40 N.mm$^{-2}$, tels le hêtre ou l'acacia, ont montré des résultats relativement satisfaisant sur les critères techniques susvisés mais ces bois sont trop chers et plus difficilement usinable, ce qui les rend impropre pour cet usage industriel.

Ce support de réception 20 présente une épaisseur comprise entre cinq millimètres et trente millimètres. Des fonctions complémentaires de ce support de réception 20 consistent à réceptionner le cordon extrudé sans que ce dernier n'adhère au support de réception 20, ni bien entendu ne soit déformé ou dégrader par ce dernier.

Considérant ce support de réception 20, un aspect important réside dans sa localisation autour du bras robotisé 30, ou au moins en partie autour de ce bras robotisé 30. Ainsi, ici le support de réception 20 présente une forme générale en L, le bras robotisé 30 étant situé à proximité de la portion de jonction 23 sensiblement à égale distance des portions d'extrémité 21, 22. On peut également prévoir que le support de réception 20 se présente sous la forme générale d'un cadre carré ou circulaire entourant le bras robotisé 30, ce dernier 30 étant complètement entouré ou ceinturé par le support de réception 20. Enfin, le support de réception 20 peut présenter une forme générale en I ou encore une forme générale en U avec trois côtés entourant le bras robotisé 30.

Le support de réception 20 est monté sur un piétement de surélévation 40, par exemple en métal tel qu'un acier ou en bois, qui permet de placer le support de réception 20 à une hauteur du sol comprise entre vingt centimètres et un mètre, de manière à s'adapter aux dimensions du bras robotisé 30 et à faciliter la prise et la manutention de l'objet décoratif 1 réalisé sur le support de réception 20.

Les moyens de commande et de déplacement de la filière d'extrusion 50 consistent pour une part en le bras robotisé 30. Ce bras robotisé 30 comprend deux sections, une première section 31 s'étendant à partir du socle 32 du bras robotisé 30 et une deuxième section 33 s'étendant dans la continuité de la première section 31, cette deuxième section 33 portant ou fixant à son extrémité libre la portion distale 34, formant bras, sur laquelle est montée et fixée la filière d'extrusion 50. La première section 31 du bras robotisé 30 est montée libre en rotation sur la partie formant socle 32 du bras robotisé 30 et peut également s'orienter transversalement pour être disposer face à une portion 21, 22 ou 23 du support de réception 20. Ainsi, cette première section 31 du bras robotisé 30 est susceptible, dans l'exemple choisi pour illustrer l'invention, de s'orienter transversalement suivant un angle d'au moins 180°, compte tenu que le support de réception 20 forme un L.

Le bras robotisé 30 est fixé à une structure de base 35 destinée à le maintenir et à le stabiliser.

La deuxième section 33 du bras robotisé 30 est également montée libre en rotation, à son extrémité proche de la première section 31, tandis qu'elle 33 porte à son autre extrémité la portion distale 34 sur laquelle est montée et fixée la filière d'extrusion 50. A la différence de la première section 31, cette deuxième section 33 ne présente aucune possibilité d'orientation transversale et suit bien entendu un éventuel déplacement transversal de la première section 31.

Les liaisons entre la première section 31 et le socle 32, entre la première section 31 et la deuxième section 33, entre la deuxième section 33 et la portion distale (ou bras) du bras robotisé 30 forment les articulations de ce dernier.

Des moyens d'actionnement, du type vérins et/ou moteurs rotatifs, disposés au niveau de ces articulations permettent *in fine* de produire des mouvements de translation et éventuellement de rotation de la filière d'extrusion 50.

Les dimensions de la première et de la deuxième sections 31, 33 sont adaptées à l'usage du bras robotisé 30, c'est-à-dire à la fabrication de l'objet décoratif 1 sur le support de réception 20.

La filière d'extrusion 50 est une filière d'extrusion classique qui n'est modifiée en rien dans le cadre de la présente invention, si ce n'est au niveau du diamètre d'ouverture D de sa tête d'extrusion 51 qui est en lien avec la distance ou la hauteur H à laquelle cette tête d'extrusion 51 se trouve ou se situe de la surface du support de réception 20. Il doit être noté ici que la figure 3 ne présente aucun caractère limitatif ou contraignant au niveau des dimensionnements des valeurs D et H de sorte que l'on ne peut déduire aucune valeur dimensionnelle, ou rapport de valeurs, de cette figure. Bien entendu, lorsque le procédé de fabrication selon l'invention est envisagé pour réaliser un objet décoratif 1 multicouches, c'est-à-dire par superposition d'une pluralité de cordons extrudés placés les uns sur les autres, c'est la surface de la dernière couche de cordons extrudé qui forme le support de réception 20. En conséquence, dans ce dernier cas, la distance H n'est plus celle entre le support de réception 20 et la tête d'extrusion 51 mais la distance ou la hauteur, toujours désignée H, entre la surface supérieure du cordon extrudé et la tête d'extrusion 51.

Considérant la filière d'extrusion 50, le diamètre d'ouverture D de la tête d'extrusion 51 peut être fixe ou variable, selon des possibilités bien connues dans le domaine technique mais bien entendu, ce diamètre d'ouverture D étant généralement constant pendant la durée d'extrusion du cordon pour former l'objet décoratif 1. Dans l'hypothèse où ce diamètre d'ouverture D est variable ou différent au cours de la fabrication de l'objet décoratif 1, le rapport défini dans le cadre de la présente invention entre les longueurs H et D reste toujours valable. Ainsi, si on modifiait D au cours de la fabrication d'un objet décoratif 1 selon l'invention, alors H est modifié en conséquence.

Les moyens de commande et de déplacement de la filière d'extrusion 50 comprennent par ailleurs une unité de gestion électronique, non représentée sur les figures annexées. Les mouvements du bras robotisé 30 sont pilotés par cette unité de gestion électronique. L'unité de gestion électronique se présente notamment sous la forme d'un ordinateur portable ou fixe, pourvu notamment d'un processeur, microprocesseur ou CPU (pour « Central Processing Unit ») et d'une mémoire, dans laquelle est enregistré un logiciel dont les instructions, lorsqu'elles sont exécutées par le processeur, microprocesseur ou CPU, permettent de commander le déplacement de la filière d'extrusion 50 dans l'espace. Cette unité de gestion électronique gère aussi la filière d'extrusion 50, c'est-à-dire en particulier l'alimentation en composition à base polymère et le débit d'extrusion.

Le terme « logiciel » peut être compris comme : application informatique, programmes informatiques ou « software ». Par souci de clarté, il faut comprendre au sens de l'invention que « le bras robotisé fait quelque chose » signifie « le logiciel exécuté par le processeur, microprocesseur ou CPU de l'unité de gestion électronique fait quelque chose ».

Le déplacement de la filière d'extrusion 50 selon une trajectoire prédéfinie permet de fabriquer un objet décoratif 1 par dépose de matière, pour un objet décoratif monocouche, ou par ajout de matière (fabrication additive) par empilement en couches de cordons extrudés. Ces couches de cordons extrudés peuvent être empilées les unes au-dessus des autres et/ou éventuellement les unes à côtés des autres. L'empilement des couches de cordons extrudés crée le volume de l'objet décoratif 1 même si un tel objet 1 disposant de cordon monocouche présente déjà une épaisseur d'au moins plusieurs millimètres. La trajectoire de la filière d'extrusion 50 selon les axes longitudinal, axial et éventuellement vertical, soit suivant trois directions perpendiculaires entre elles, permet de réaliser tous types de contours et courbes de l'objet décoratif 1 désiré.

En pratique, un concepteur dessine l'objet décoratif 1 souhaité grâce à un outil de conception assistée par ordinateur (CAO). Le fichier obtenu est traité par le logiciel enregistré dans la mémoire de l'unité de gestion électronique suivant l'équation objet de la présente invention. Le bras robotisé 30 est piloté selon cette équation de sorte que la filière d'extrusion 50 dépose le cordon couche par couche, si besoin, jusqu'à obtenir l'objet décoratif final 1. L'objet décoratif 1 est ainsi obtenu de manière rapide, précise et avec une répétabilité optimale.

Les figures 5 à 8 illustrent plus spécifiquement l'invention lorsque l'on cherche à réaliser un objet décoratif en relief ou présentant au moins une portion en relief. Pour ce faire, au moins une portion correspondante du support de réception 20 présente un relief qui forme, par application du cordon extrudé, ledit objet décoratif.

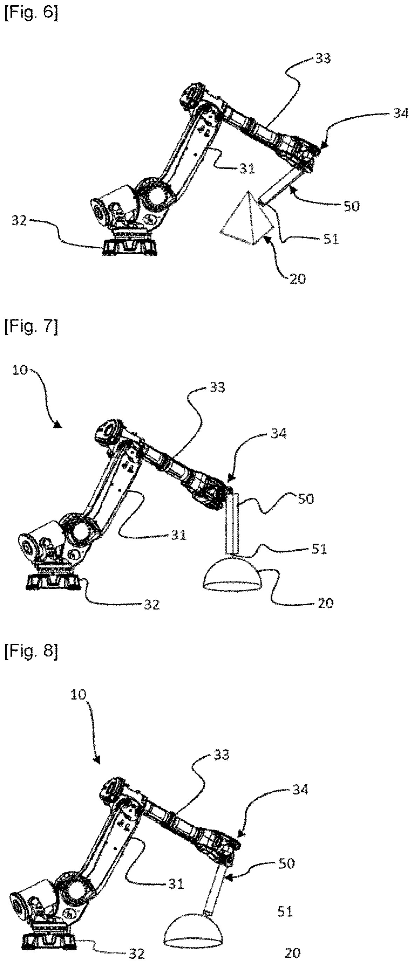

Comme on peut le voir sur ces figures, ce relief peut consister par exemple en une pyramide (cf. figures 5 et 6) ou une demi-sphère (cf. figures 7 et 8) mais peut bien entendu se présenter sous toutes les formes. On peut noter ici que ces reliefs présentent avantageusement une face plane de manière à être positionnés aisément sur un support, de préférence sur la partie plane ou horizontale du support de réception 20. Ainsi, on peut également envisager que le support de réception 20 en relief ne présente aucune surface plane mais bien entendu, dans ce cas, ce support de réception 20 en relief est maintenu par un bras ou analogue. Dans cette hypothèse, ce bras ou analogue maintenant le support de réception 20 en relief est avantageusement mobile de sorte que la tête d'extrusion 51 suive plus aisément la surface de manière perpendiculaire.

La figure 9 illustre un mode de réalisation dans lequel la filière d'extrusion 50 est disposé à distance du bras robotisé 30, ce qui permet d'alléger ce dernier 30 et ainsi faciliter les déplacements de la tête d'extrusion 51. Idéalement, comme illustré sur cette figure, la filière d'extrusion 50 est disposée à proximité des moyens de commande ou d'une partie desdits moyens de commande du dispositif 10 selon l'invention.

Selon une autre variante de réalisation, la tête d'extrusion 51 est fixe et c'est le support 20 qui est déplacé. C'est dans ce cas le support 20 qui est solidarisé à un moyen de déplacement du type bras robotisé 30 ou chariot 8 précité, le déplacement dudit plateau étant piloté par l'unité de gestion.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'agencement des différents éléments et/ou moyens et/ou étapes de l'invention, dans les modes de réalisation décrits ci-dessus, ne doit pas être compris comme exigeant un tel agencement dans toutes les implémentations. Diverses variantes peuvent être prévues, et notamment :

- la forme et les dimensions du support de réception 20 du cordon extrudé sont variables, en fonction de l'objet décoratif 1 à réaliser mais surtout en fonction de la disposition et des dimensions du bras robotisé 30, plus ces dernières sont grandes plus les dimensions du support de réception 20 peuvent être variées et grandes,

- le bras robotisé 30 peut présenter autant de sections 21, 22, 23 que nécessaires ou utiles pour la fabrication de l'objet décoratif 1. De la même manière, la forme et le degré de liberté du bras robotisé 30 sont variables pour autant qu'ils offrent la possibilité d'amener la tête d'extrusion 51 à la hauteur souhaitée du support de réception 20, compte tenu du diamètre d'ouverture D de la tête d'extrusion 51. On peut également prévoir qu'il y ait une pluralité de bras robotisé 30 et autant de têtes d'extrusion 51 distantes ou non de chacun desdits bras, par exemple au moins deux bras robotisé 30 travaillant de concert pour fabriquer un objet décoratif 1 selon l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

**1.** Procédé de fabrication d'un objet décoratif (1) à partir d'au moins une couche d'un cordon extrudé d'une composition à base polymère, comportant une étape de passage d'une composition à base polymère dans une filière d'extrusion (50) depuis une entrée d'alimentation en ladite composition jusqu'à une tête d'extrusion (51) de laquelle sort un cordon extrudé de ladite composition, le cordon extrudé étant déposé sur un support de réception (20) par l'effet de la gravitation,
la tête d'extrusion (51) étant commandée par des moyens de commande pour suivre un trajet continu destiné à former ledit objet décoratif (1) selon une couche, **caractérisé en ce que** lesdits moyens de commande commandent une variation de la vitesse V de déplacement de la tête d'extrusion (51) en fonction d'une variation du trajet de la tête d'extrusion (51) d'un angle $\alpha$, et **en ce que**, à une distance D d'un changement d'angle $\alpha$, le trajet continu de la tête d'extrusion (51) suit l'équation suivante, pour chacune des couches formant l'objet décoratif le cas échéant :

$$D = a + (b \times V^c) + (d \times \alpha)$$

avec a, b, c et d étant des constantes suivant les valeurs suivantes

$$a = 10,6 \pm 10\%$$

$$b = 2,76^{-05} \pm 10\%$$

$$c = 2,72 \pm 10\%$$

$$d = -0,08 \pm 10\%$$

D étant exprimé en millimètre, V en millimètre par seconde et $\alpha$ en degré.

2. Procédé selon la revendication 1, dans lequel les constantes a, b, c et d s'expriment suivant les valeurs suivantes

$$a = 10,6 \pm 5\%$$

$$b = 2,76^{-05} \pm 5\%$$

$$c = 2,72 \pm 5\%$$

$$d = -0,08 \pm 5\%$$

3. Procédé selon la revendication 1 ou 2, dans lequel un bras robotisé (30), commandé par les moyens de commande, comporte un moyen de stockage d'un volume de la composition à base polymère ainsi que des moyens de transport dudit polymère jusqu'à la tête d'extrusion (51).

4. Procédé selon la revendication 3, dans lequel la filière d'extrusion (50) est montée à une extrémité du bras robotisé (30).

5. Procédé selon la revendication 3, dans lequel la filière d'extrusion (50) est montée à distance du bras robotisé (30) de sorte que seule ladite tête d'extrusion (51) est déplacée pour suivre le trajet continu.

6. Procédé selon l'une des revendications précédentes, dans lequel la composition à base polymère consiste en une matrice polymère comportant au moins 70% en poids, avantageusement au moins 95% en poids, d'acrylonitrile butadiène styrène (ABS), d'acide polylactique (polyester PLA), de polycarbonate (PC) ou de Polyéthylène téréphtalate (PET).

7. Procédé selon l'une des revendications précédentes, dans lequel la vitesse V de la tête d'extrusion (51) est fonction du débit extrudé par la tête d'extrusion (51).

8. Procédé selon l'une des revendications précédentes, dans lequel le cordon extrudé sort de la tête d'extrusion (51) avec un débit compris entre cinq et quinze kilos par heure, avantageusement compris entre huit et douze kilos par heure.

9. Procédé selon l'une des revendications précédentes, dans lequel le cordon extrudé présente, en sortie de la tête d'extrusion (51), une viscosité comprise entre quatre cents et quatre cent cinquante Pascal par seconde définie selon la norme ISO 11443.

10. Procédé selon l'une quelconque des revendications précédentes, dans lequel la température du cordon extrudé, à la sortie de la tête d'extrusion (51), étant comprise entre 160°C et 260°C, de préférence comprise entre 200°C et 240°C.

**Patentansprüche**

1. Verfahren zur Herstellung eines Dekorgegenstands (1) aus mindestens einer Schicht aus einem extrudierten Strang mit einer Zusammensetzung auf Polymerbasis, das einen Schritt zum Führen einer Zusammensetzung auf Polymerbasis in einer Extrusionsdüse (50) von einem Einlass zur Versorgung mit der Zusammensetzung bis zu einem Extrusionskopf (51) umfasst, aus dem ein extrudierter Strang aus der Zusammensetzung austritt, wobei der extrudierte Strang über die Wirkung der Schwerkraft auf einem Aufnahmeträger (20) aufgebracht wird,

   wobei der Extrusionskopf (51) mit Ansteuermitteln so angesteuert wird, dass er einer kontinuierlichen Bahn folgt, auf der der Dekorgegenstand (1) in einer Schicht gebildet werden soll, **dadurch gekennzeichnet, dass** die Ansteuermittel eine Veränderung der Verfahrgeschwindigkeit V des Extrusionskopfs (51) in Abhängigkeit von einer Veränderung der Bahn des Extrusionskopfs (51) um einen Winkel $\alpha$ bewirken, und dadurch, dass bei einem Abstand D zu einer Änderung des Winkels $\alpha$ die kontinuierliche Bahn des Extrusionskopfs (51) für jede der Schichten, aus denen der Dekorgegenstand gegebenenfalls gebildet ist, folgender Gleichung entspricht:

   $$D = a + (b \times V^c) + (d \times \alpha)$$

   wobei a, b, c und d Konstanten sind, die folgenden Werten entsprechen:

   $$a = 10,6 \pm 10\%$$

   $$b = 2,76^{-05} \pm 10\%$$

   $$C = 2,72 \pm 10\%$$

   $$d = -0,08 \pm 10\%$$

   wobei D in Millimetern, V in Millimetern pro Sekunde und $\alpha$ in Grad ausgedrückt ist.

2. Verfahren nach Anspruch 1, wobei die Konstanten a, b, c und d folgenden Werten entsprechen:

   $$a = 10,6 \pm 5\%$$

   $$b = 2,76^{-05} \pm 5\%$$

   $$c = 2,72 \pm 5\%$$

   $$d = -0,08 \pm 5\%$$

3. Verfahren nach Anspruch 1 oder 2, wobei ein Roboterarm (30), der mit den Ansteuermitteln angesteuert wird, ein Mittel zum Aufnehmen eines Volumens der Zusammensetzung auf Polymerbasis sowie Mittel zum Transport des Polymers bis zum Extrusionskopf (51) aufweist.

4. Verfahren nach Anspruch 3, wobei die Extrusionsdüse (50) an einem Ende des Roboterarms (30) montiert ist.

5. Verfahren nach Anspruch 3, wobei die Extrusionsdüse (50) derart in einem Abstand zum Roboterarm (30) montiert ist, dass zum Folgen der kontinuierlichen Bahn ausschließlich der Extrusionskopf (51) bewegt wird.

6. Verfahren nach einem der vorhergehenden Ansprüche, wobei die Zusammensetzung auf Polymerbasis aus einer Polymermatrix besteht, die mindestens 70 Gewichts-%, vorteilhafterweise mindestens 95 Gewichts-% Acrylnitril-Butadien-Styrol (ABS), Polymilchsäure (PLA-Polyester), Polycarbonat (PC) oder Polyethylenterephthalat (PET) umfasst.

7. Verfahren nach einem der vorhergehenden Ansprüche, wobei die Geschwindigkeit V des Extrusionskopfs (51) von dem mit dem Extrusionskopf (51) extrudierten Durchsatz abhängt.

8. Verfahren nach einem der vorhergehenden Ansprüche, wobei der extrudierte Strang aus dem Extrusionskopf (51) mit einem Durchsatz zwischen fünf und fünfzehn Kilo pro Stunden, vorteilhafterweise zwischen acht und zwölf Kilo pro Stunde austritt.

9. Verfahren nach einem der vorhergehenden Ansprüche, wobei der extrudierte Strang am Austritt des Extrusionskopfs (51) eine Viskosität zwischen vierhundert und vierhundertfünfzig Pascal pro Sekunde laut ISO-Norm 11443 aufweist.

10. Verfahren nach einem der vorhergehenden Ansprüche, wobei die Temperatur des extrudierten Strangs am Austritt des Extrusionskopfs (51) zwischen 160°C und 260°C, vorzugsweise zwischen 200°C und 240°C liegt.

**Claims**

1. Method of manufacturing a decorative object (1) from at least one layer of an extruded cord of a polymer-based composition, including a step of passage of a polymer-based composition in an extrusion die (50) from a feed input of said composition to an extrusion head (51) from which emerges an extruded cord of said composition, the extruded cord being deposited on a receiving support (20) by the effect of gravity, the extrusion head (51) being controlled by control means to follow a continuous trajectory intended to form said decorative object (1) in one layer, **characterised in that** said control means control a variation of the speed V of movement of the extrusion head (51) as a function of a variation of the trajectory of the extrusion head (51) by an angle $\alpha$ and **in that** at a distance D from a change of angle $\alpha$ the continuous trajectory of the extrusion head (51) obeys the following equation, where applicable for each of the layers forming the decorative object:

$$D = a + (b \times V^c) + (d \times \alpha)$$

where a, b, c and d are constants with the following values

$$a = 10.6 \pm 10\%$$

$$b = 2.76^{-05} \pm 10\%$$

$$c = 2.72 \pm 10\%$$

$$d = -0.08 \pm 10\%$$

D being expressed in millimetres, V in millimetres per second and $\alpha$ in degrees.

2. Method according to claim 1 in which the constants a, b, c and d take the following values

$$a = 10.6 \pm 5\%$$

$$b = 2.76^{-05} \pm 5\%$$

$$c = 2.72 \pm 5\%$$

$$d = -0.08 \pm 5\%$$

3. Method according to claim 1 or 2 in which a robot arm (30) controlled by the control means includes means for storing a volume of the polymer-based composition and means for transporting said polymer to the extrusion head (51).

4. Method according to claim 3 in which the extrusion die (50) is mounted at one end of the robot arm (30).

5. Method according to claim 3 in which the extrusion die (50) is mounted at a distance from the robot arm (30) so that only said extrusion head (51) is moved to follow the continuous trajectory.

6. Method according to any one of the preceding claims in which the polymer-based composition consists in a polymer matrix including at least 70% by weight, advantageously at least 95% by weight, of acrylonitrile butadiene styrene (ABS), polylactic acid (polyester PLA), polycarbonate (PC) or polyethylene terephthalate (PET) .

7. Method according to any one of the preceding claims in which the speed V of the extrusion head (51) is a function of the flowrate extruded by the extrusion head (51).

8. Method according to any one of the preceding claims in which the extruded cord leaves the extrusion head (51) at a flowrate between five and fifteen kilos per hour inclusive, advantageously between eight and twelve kilos per hour inclusive.

9. Method according to any one of the preceding claims in which on leaving the extrusion head (51) the extruded cord has a viscosity between four hundred and four hundred and fifty Pascal per second defined in accordance with the standard ISO 11443.

10. Method according to any one of the preceding claims in which the temperature of the extruded cord on leaving the extrusion head (51) is between 160°C and 260°C inclusive, preferably between 200°C and 240°C inclusive.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

**RÉFÉRENCES CITÉES DANS LA DESCRIPTION**

**Documents brevets cités dans la description**

- FR 2796446
- FR 3069800